# EUROPÄISCHE PATENTSCHRIFT

(11) **EP 3 938 161 B1**
(45) Veröffentlichungstag und Bekanntmachung des Hinweises auf die Patenterteilung: **28.12.2022**
(21) Anmeldenummer: 20706248.0
(22) Anmeldetag: 20.02.2020
(51) Int. Cl.: B28B 11/16, B28B 11/14, B28D 7/00, B28D 1/04, B23D 59/00

(54) **VERFAHREN ZUM BEARBEITEN, INSBESONDERE ZERTRENNEN, WENIGSTENS EINES BETONTEILS**
METHOD FOR MACHINING, IN PARTICULAR SEVERING, AT LEAST ONE CONCRETE PART
PROCÉDÉ POUR USINER, EN PARTICULIER DÉCOUPER, AU MOINS UNE PIÈCE DE BÉTON

(30) Priorität: 15.03.2019 AT 502252019
(43) Veröffentlichungstag der Anmeldung: 19.01.2022
(73) Patentinhaber: Progress Holding A.G., 39042 Brixen (IT)
(72) Erfinder: ENDERES, Karl, 39042 Brixen (IT)
(74) Vertreter: Torggler & Hofmann Patentanwälte - Innsbruck
(86) Internationale Anmeldenummer: PCT/EP2020/054499
(87) Internationale Veröffentlichungsnummer: WO 2020/187524

(56) Entgegenhaltungen:
- JP-A- H04 361 006
- JP-A- 2002 096 293
- JP-A- 2002 355 815
- US-A- 5 529 735
- US-A1- 2006 219 070

## Beschreibung

Die Erfindung betrifft ein Verfahren zum Bearbeiten, insbesondere Zertrennen, wenigstens eines Betonteils und ein Verfahren zur Herstellung wenigstens eines Betonfertigteilprodukts.

Die Erfindung betrifft weiterhin eine Anordnung zum Bearbeiten, insbesondere Zertrennen, wenigstens eines Betonteils.

Verfahren und Anordnungen der eingangs genannten Art zählen bereits zum Stand der Technik und werden beispielsweise in der EP 2 944 736 A1 gezeigt.

Beim Stand der Technik werden oftmals Laser-Messeinrichtungen zusammen mit Daten verwendet, um ein Betonteil zu bearbeiten. Werden mehrere aneinander gereihte Betonteile, die aus einem Strang stammen, entlang dieser Lasermessung bearbeitet oder aus dem Strang herausgetrennt, kann es nach mehreren Bearbeitungen entlang dem Strang zu Summenfehlern kommen.

In anderen Worten: es weicht die Genauigkeit der Bearbeitung mit zunehmender Strecke entlang des durch einen Extruder hergestellten Betonteiles immer mehr ab. Hierzu tragen unter anderem die folgenden Faktoren bei: Ungenauigkeiten des Lasers, Ungenauigkeiten der Daten, Schwund beim Trocknen des Betons, Ungenauigkeiten des Personals, welches die Bearbeitung durchführt.

Hinzu kommt noch das Problem, dass Markierungen, welche kurz nach dem Gießen des Stranges aufgebracht wurden, und beispielsweise zu bearbeitende Stellen markieren sollen (Schnittlinien, etc...) beim Trocknen des Betons aufgrund des Schwundes nicht mehr exakt stimmen. Hierbei handelt es sich oftmals nur um Millimeter, was in der Baubranche durchaus toleriert wird. Dennoch macht es einen negativen Eindruck, wenn sich die Markierung an einer anderen Stelle befindet als die Schnittkante - auch wenn es nur um kleine Abweichungen handelt.

Die Markierungen können durch Plotter auf dem Betonteil aufgebracht werden. Diese Plotter arbeiten mit digitalen Daten. Die Daten müssen mit der Lasermessung und auch der im Abschluss das Betonteil bearbeitenden Bearbeitungsvorrichtung in Einklang gebracht werden, was beim Stand der Technik nicht der Fall ist. Aufgrund des Schwundes zum Beispiel kann es sein, dass die über digitale Daten gesteuerte Bearbeitungsvorrichtung (beispielsweise eine Säge) die Stunden vorher angebrachte Markierungen nicht korrekt anfährt. Die Lasermessung stimmt aufgrund des Schwundes zum Beispiel auch nicht mehr. Das Dokument JP H04 361006 A offenbart ein Verfahren und eine Anordnung zum bearbeiten wenigstens eines Betonteils, gemäß dem Oberbegriff des Anspruchs 1, 11 bzw.

Aufgabe der Erfindung ist es, die vorbeschriebenen Nachteile zu vermeiden und ein gegenüber dem Stand der Technik verbessertes Verfahren zum Bearbeiten wenigstens eines Betonteils, ein verbessertes Verfahren zur Herstellung wenigstens eines Betonfertigteilprodukts und eine verbesserte Anordnung zum Bearbeiten, insbesondere Zertrennen, wenigstens eines Betonteils anzugeben.

Dies wird bei den erfindungsgemäßen Verfahren durch die Merkmale der Ansprüche 1 und 10 und bei der erfindungsgemäßen Anordnung durch die Merkmale des Anspruches 11 erreicht.

Das Verfahren erlaubt eine verbesserte Bearbeitung wenigstens eines Betonteiles, wenn die Arbeitsschritte des Anspruchs 1 beinhaltet sind.

Dadurch, dass die wenigstens eine Markierung durch eine Markierungserfassungsvorrichtung erfasst und die dabei generierten Markierungsdaten an die wenigstens eine Bearbeitungsvorrichtung übermittelt werden, können Summenfehler ausgeschlossen werden. Eine Bearbeitung erfolgt somit nur dann, wenn die Markierungserfassungsvorrichtung eine Bestätigung durch die Markierung erhält. Somit wird die Bearbeitungsvorrichtung nicht nur durch die zusätzlichen Daten, sprich, die Konstruktionsdaten des wenigstens einen Betonteiles angesteuert oder positioniert, sondern auch durch die Daten der Markierung (Markierungsdaten).

So kann beispielsweise ein Schnitt oder eine andere Bearbeitung neben oder entfernt von der Markierung ausgeschlossen werden. Die Bearbeitung erfolgt exakt an der Stelle, welche auch markiert wurde. Es kann die Bearbeitungsvorrichtung jedoch auch ohne zusätzliche Daten direkt die Markierung anfahren und die Bearbeitung an der markierten Stelle vornehmen.

Somit kann vorgesehen sein, dass in einem weiteren Verfahrensschritt die zusätzlichen Daten mit den Markierungsdaten verglichen werden. Beim Vergleich wird die Genauigkeit der Position der wenigstens einen Bearbeitungsvorrichtung erhöht.

Die zusätzlichen Daten werden durch die wenigstens eine Bearbeitungsvorrichtung abgefahren, bis die Markierung durch die Markierungserfassungsvorrichtung gefunden wird. Im Anschluss erfolgt die Bearbeitung. Dadurch erfolgt eine rasche und exakte Positionierung der wenigstens einen Bearbeitungsvorrichtung relativ zum wenigstens einen Betonteil.

Beim Vergleich der zusätzlichen Daten und der Markierungsdaten erfolgt eine Art Selbstkontrolle bei der Bearbeitung der Betonteile. Diese Selbstkontrolle kann aufgrund der digitalen Erfassung im Wesentlichen vollautomatisch erfolgen.

Es kann vorgesehen sein, dass die zusätzlichen Daten von einer zentralen Steuereinrichtung bereitgestellt und, vorzugsweise über wenigstens eine Datenübertragungsvorrichtung, an die wenigstens eine Bearbeitungsvorrichtung, vorzugsweise drahtlos, und/oder mittels wenigstens eines Datenspeichers, z.B. eines USB-Sticks, übermittelt werden. Dadurch entsteht eine rasche und somit auch wirtschaftliche Bearbeitung durch die wenigstens eine Bearbeitungsvorrichtung, da diese nicht manuell in die zu bearbeitende Position geführt werden, sondern beispielsweise vollautomatisch auf dem zu bearbeitenden Betonteil verfährt.

Es kann somit vorgesehen sein, dass die wenigstens eine Bearbeitungsvorrichtung anhand der zusätzlichen Daten bis zur wenigstens einen Markierung verfährt, dort die wenigstens eine Markierung durch die Markierungserfassungsvorrichtung erfasst wird und an die Bearbeitungsvorrichtung weitergegeben wird. Beide Datensätze - die zusätzlichen Daten und die Markierungsdaten - werden zusammen verwendet, um die wenigstens eine Bearbeitungsvorrichtung an der korrekten Position arbeiten zu lassen. Falls die Markierungsdaten beispielsweise nicht mit den zusätzlichen Daten zusammenpassen, wird keine Bearbeitung durchgeführt.

Es kann auch vorgesehen sein, dass die grobe Positionierung der wenigstens einen Bearbeitungsvorrichtung durch die zusätzlichen Daten erfolgt, die Feinpositionierung über die Markierungserfassungsvorrichtung anhand der auf dem Betonteil angeordneten Markierungen - somit anhand der erfassten Markierungsdaten.

Als vorteilhaft hat es sich herausgestellt, wenn die wenigstens eine Markierung als Referenzmarkierung ausgebildet ist, welche für einen Teilabschnitt des wenigstens einen Betonteils verwendet wird, vorzugsweise wobei der Teilabschnitt des wenigstens einen Betonteils genau eine Referenzmarkierung aufweist.

Wird nur ein Referenzpunkt am Beginn eines Stranges gesetzt, kommt es zur Aufsummierung von Fehlern und Toleranzen bei der Bearbeitung, was sich vor allem bei den letzten am Strang produzierten oder bearbeiteten Betonfertigteilprodukten bemerkbar macht. Wird für jedes einzelne Betonfertigteilprodukt ein eigener Referenzpunkt in Form einer Referenzmarkierung geschaffen, werden Summenfehler verhindert, da die wenigstens eine Bearbeitungsvorrichtung für jedes zu bearbeitende Betonteil eigene Messwerte oder Daten ausgehend von dieser individuellen Referenzmarkierung erhält.

Somit kann die Markierungserfassungsvorrichtung für jedes einzelne zu bearbeitende Betonteil einen eigenen Referenzpunkt finden, was Summenfehler entlang dem als Strang gegossen Betonteil verhindert. Beim Stand der Technik wurde meist nur eine Lasermessung ausgehend von einem Punkt (Referenzpunkt) am Anfang des Stranges durchgeführt - Summenfehler werden so provoziert.

Es ist vorteilhaft, wenn die wenigstens eine Markierung wenigstens eine Linie und/oder zweidimensionale Form umfasst. Je nach Ausführung der Markierungserfassungsvorrichtung kann diese so erkannt werden. Weiters kann die Markierung auch Daten beinhalten, welche von der Markierungserfassungsvorrichtung erkannt werden (beispielsweise Codes wie Strichcodes, QR-Codes, etc... ). Die Markierungen können jedoch auch nur einfache Schnittlinien sein, entlang welcher ein Schnitt durch eine Säge durchzuführen ist. Die Markierung kann auch an jede Bearbeitungsart welche durch die wenigstens eine Bearbeitungsvorrichtung durchgeführt wird, angepasst sein.

Als vorteilhaft hat es sich erwiesen, dass die wenigstens eine Markierung durch den Auftrag wenigstens einer Markierungsfarbe am wenigstens einen Betonteil angebracht wird, vorzugsweise wobei die wenigstens eine Markierungsfarbe luminophore Partikel umfasst.

Luminophore Partikel sind Partikel, die Licht emittieren, nachdem sie zuvor z.B. mit kurzwelligerem Licht, durch ionisierende Strahlung oder chemisch angeregt wurden. Das Phänomen beruht auf Phosphoreszenz, Fluoreszenz oder Chemolumineszenz.

Es bietet sich an, dass die wenigstens eine Markierungserfassungsvorrichtung dazu ausgebildet ist, für das menschliche Auge sichtbares oder unsichtbares Licht auszusenden und/oder zu empfangen.

Eine besonders vorteilhafte Arbeitsweise kann beispielsweise darin bestehen, dass die wenigstens eine Markierungserfassungsvorrichtung sichtbares oder unsichtbares Licht auszusendet, welches von der wenigstens einen Markierung reflektiert wird.

Alternativ oder ergänzend kann es vorgesehen sein, dass das von der wenigstens einen Markierungserfassungsvorrichtung ausgesendete Licht, z.B. in Form von UV-Licht, Partikel in der wenigstens einen Markierung z.B. durch Fluoreszenz oder Phosphoreszenz dazu anregt, Licht auszusenden, welches von der wenigstens einen Markierungserfassungsvorrichtung erfasst wird.

Es muss aber nicht zwingend vorgesehen sein, dass die wenigstens eine Markierungserfassungsvorrichtung sichtbares oder unsichtbares Licht auszusendet. Es kann auch bereits das vorhandene Umgebungslicht ausreichend sein, die wenigstens eine Markierung für die wenigstens eine Markierungserfassungsvorrichtung erfassbar zu machen.

Es kann auch vorgesehen sein, dass die Markierung für das freie Auge unsichtbar ist und nur von der Markierungserfassungsvorrichtung erkannt wird. Die Markierung kann auch durch einen fluoreszierenden oder durch einen in irgendeiner anderen Art leuchtenden Farbstoff aufgebracht werden, um eine bessere Sichtbarkeit oder Erkennung zu realisieren.

Wenn die wenigstens eine Markierungserfassungsvorrichtung an der wenigstens einen Bearbeitungsvorrichtung angeordnet ist und mit der wenigstens einen Bearbeitungsvorrichtung mitbewegt wird, so kann eine direkte Verarbeitung der erfassten Daten durch die Bearbeitungsvorrichtung erfolgen. Somit werden Fehlerquellen oder Ungenauigkeiten vermieden.

Für eine verbesserte Bearbeitung eines Betonteiles und/oder einen verbesserten Zuschnitt eines Betonteiles hat es sich als vorteilhaft herausgestellt, wenn die wenigstens eine Bearbeitungsvorrichtung
- wenigstens eine Wegmessvorrichtung, vorzugsweise wenigstens einen Drehgeber, umfasst, mit welcher der von der wenigstens eine Bearbeitungsvorrichtung relativ zum wenigstens einen Betonteil zurückgelegte Weg gemessen wird, und/oder
- wenigstens eine Datenempfangsvorrichtung aufweist, über welche zusätzliche Daten zur Positionierung der wenigstens einen Bearbeitungsvorrichtung relativ zum wenigstens einen Betonteils und/oder zur Bearbeitung des wenigstens einen Betonteils durch die wenigstens eine Bearbeitungsvorrichtung empfangen werden, und/oder
- wenigstens eine prozessorgesteuerte Datenverarbeitungsvorrichtung aufweist, über welche die wenigstens eine Bearbeitungsvorrichtung gesteuert wird, und/oder
- wenigstens eine Antriebsvorrichtung aufweist, mit welcher die wenigstens eine Bearbeitungsvorrichtung relativ zum wenigstens einen Betonteil bewegt wird, und/oder
- wenigstens ein Schneidwerkzeug aufweist, mit welchem das wenigstens eine Betonteil an wenigstens einer vorbestimmten Position zertrennt wird.

Durch die Wegmessvorrichtung kann eine zusätzliche Kontrolle der Position und des zurückgelegten Weges der Bearbeitungsvorrichtung erfolgen, welche mit den zusätzlichen Daten und/oder den Markierungsdaten in Zusammenhang gebracht werden können um beispielsweise Datenabgleiche für eine effizientere Bearbeitung oder auch einfach einen Stopp der Bearbeitung im Falle eines Fehlers durchführen zu können. Dieser Abgleich kann beispielsweise durch die Datenverarbeitungs-vorrichtung durchgeführt werden.

Gemäß einem weiteren Aspekt der Erfindung ist ein Verfahren zur Herstellung wenigstens eines Betonfertigteilprodukts, insbesondere wenigstens einer Hohldecke, vorgesehen, wobei das wenigstens eine Betonfertigteilprodukt mittels des Verfahrens zum Bearbeiten, insbesondere Zertrennen, wenigstens eines Betonteils nach den oben geschilderten Verfahrensschritten aus dem wenigstens einen Betonteil gewonnen wird Gemäß einem weiteren Aspekt der Erfindung ist eine Anordnung zum Bearbeiten, insbesondere Zertrennen, wenigstens eines Betonteils, gemäß den Merkmalen des Anspruchs 11 vorgesehen.

Durch diese Anordnung können Betonfertigteilprodukte oder Betonteile einfacher, genauer und effizienter produziert werden.

Bei der Anwendung einer derartigen Anordnung kann eine Art Selbstkontrolle bei der Bearbeitung der Betonteile erfolgen. Diese Selbstkontrolle kann aufgrund der digitalen Erfassung im Wesentlichen vollautomatisch geschehen.

Wenn die Anordnung
- wenigstens einen Extruder oder Gleitschalungsfertiger zur Herstellung des wenigstens einen Betonteils aufweist, und/oder
- wenigstens eine automatische Markierungsvorrichtung zur Anbringung wenigstens einer Markierung am wenigstens einen Betonteil aufweist, kann die Fertigung und im Anschluss die Markierung des wenigstens einen Betonteiles rasch und automatisiert erfolgen und somit auch die Vorbereitung für eine effiziente und genaue Bearbeitung getroffen werden.

Es wird eine effiziente und genaue Bearbeitung erfolgen, da die Anordnung wenigstens eine Markierungserfassungsvorrichtung zur Erfassung wenigstens einer auf dem Betonteil angebrachten Markierung aufweist, vorzugsweise wobei
- die wenigstens eine Markierungserfassungsvorrichtung an der wenigstens einen Bearbeitungsvorrichtung angeordnet ist, und/oder
- dazu ausgebildet ist, für das menschliche Auge sichtbares oder unsichtbares Licht auszusenden und/oder zu empfangen, und/oder
- dazu ausgebildet ist, wenigstens eine Linie und/oder zweidimensionale Form zu erfassen.

Dabei kann vorgesehen sein, dass wobei die wenigstens eine Bearbeitungsvorrichtung
- wenigstens eine Wegmessvorrichtung, vorzugsweise wenigstens einen Drehgeber, umfasst, mit welcher der von der wenigstens eine Bearbeitungsvorrichtung relativ zum wenigstens einen Betonteil zurückgelegte Weg messbar ist, und/oder
- wenigstens eine Datenempfangsvorrichtung aufweist, über welche zusätzliche Daten zur Positionierung der wenigstens einen Bearbeitungsvorrichtung relativ zum wenigstens einen Betonteils und/oder zur Bearbeitung des wenigstens einen Betonteils durch die wenigstens eine Bearbeitungsvorrichtung empfangbar sind, und/oder
- wenigstens eine prozessorgesteuerte Datenverarbeitungsvorrichtung aufweist, über welche die wenigstens eine Bearbeitungsvorrichtung steuerbar ist, und/oder
- wenigstens eine Antriebsvorrichtung aufweist, mit welcher die wenigstens eine Bearbeitungsvorrichtung relativ zum wenigstens einen Betonteil bewegbar ist, und/oder
- wenigstens ein Schneidwerkzeug aufweist, mit welchem das wenigstens eine Betonteil an wenigstens einer vorbestimmten Position zertrennbar ist. Durch die zusätzliche Wegmessvorrichtung kann eine weitere Kontrolle der Positionierung der Bearbeitungsvorrichtung erfolgen. Sämtliche Daten der Wegmesseinrichtung sowie die zusätzlichen Daten und auch die Markierungsdaten können einzeln oder zusammenwirkend in der Datenverarbeitungsvorrichtung verwendet, wie beispielsweise verglichen werden, um die Bearbeitung der Betonfertigteile noch genauer und effizienter zu gestalten und/oder automatisierte Bewegungs- oder Bearbeitungsabläufe zu ermöglichen.

Hierzu ist auch vorgesehen, dass die Anordnung eine zentrale Steuereinrichtung umfasst, wobei zusätzliche Daten zur Positionierung der wenigstens einen Bearbeitungsvorrichtung relativ zum wenigstens einen Betonteils und/oder zur Bearbeitung des wenigstens einen Betonteils durch die wenigstens eine Bearbeitungsvorrichtung von der zentralen Steuereinrichtung bereitstellbar sind, vorzugsweise wobei die Anordnung wenigstens eine Datenübertragungsvorrichtung aufweist, mit welcher die zusätzlichen Daten an die wenigstens eine Bearbeitungsvorrichtung, vorzugsweise drahtlos, und/oder mittels wenigstens eines Datenspeichers, z.B. eines USB-Sticks, übermittelbar sind.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert.

Darin zeigen:
- Fig. 1: eine schematische Darstellung des Aufbringens der Markierungen,
- Fig. 2: eine schematische Darstellung des Bearbeitens,
- Fig. 3: eine detaillierte schematische Darstellung des Markierens und Bearbeitens,
- Fig. 4: eine schematische Darstellung einer Trennvorrichtung (Säge) als Beispiel einer Bearbeitungsvorrichtung,
- Fig. 5: eine schematische Darstellung von Referenzmarkierungen,
- Fig. 6: eine schematische Darstellung von Referenzmarkierungen mit Bemaßungen oder Daten zur weiteren Bearbeitung,
- Fig. 7a - 7c: eine schematische Darstellung einer Bearbeitungsabfolge,
- Fig. 8a, 8b: eine schematische Darstellung einer Markierungserfassung,
- Fig. 9: eine schematische Darstellung eines Betonfertigteilproduktes, und
- Fig. 10: eine schematische Darstellung eines Verfahrens zur Verarbeitung eines Betonteiles zu einem Betonfertigteilprodukts.

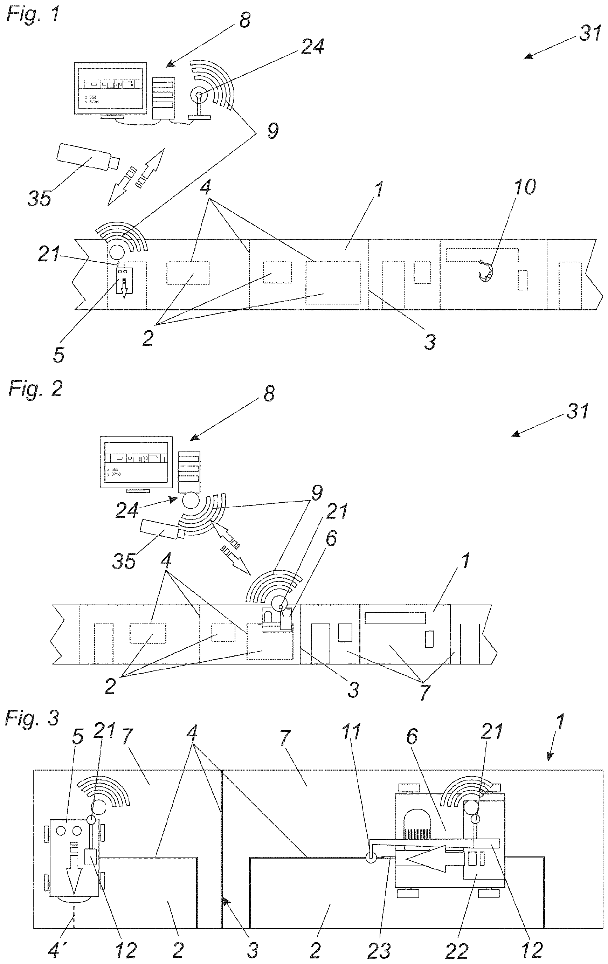

Fig. 1 zeigt eine Anordnung 31 und ein Betonteil 1, welches durch eine Markierungsvorrichtung 5, vorzugsweise einen selbstfahrenden, datengesteuerten Plotter, an den zu bearbeitenden Stellen durch Markierungen 4 markiert wird. Diese zu bearbeitenden Stellen können Ausschnitte 2, Zuschnitte 3 oder auch andere, beispielsweise Informative Markierungen 4 sein, wie beispielsweise Maßangaben, Werbeaufdrucke, Hinweise oder ähnliches.

Anstelle einer Markierungsvorrichtung 5 oder ergänzend zur Markierungsvorrichtung 5 kann auch eine Person 10 Markierungen 4 anbringen, ergänzen, entfernen oder abändern, falls dies notwendig ist.

Die Markierungsvorrichtung 5 kann über eine Datenübertragung 9 Daten, vorzugsweise zusätzliche Daten 19 in Form von Konstruktionsdaten (wie zum Beispiel PXML Daten, CAD Daten, Vektorgraphiken, etc...) von einer Steuereinrichtung 8 empfangen und auch Daten an die Steuereinrichtung 8 zurücksenden. Anhand dieser Datenübertragung 9 kann die Markierungsvorrichtung 5 vorzugsweise vollautomatisch die Markierungen 4 auf dem Betonteil 1 auftragen.

Die Datenübertragung 9 kann über eine Datenübertragungsvorrichtung 24 an der Steuereinrichtung 8 und eine Datenempfangsvorrichtung 21 an der Markierungsvorrichtung 5 entweder drahtlos und/oder via Kabel und/oder über einen Datenspeicher 35 erfolgen. Als Datenspeicher 35 kann beispielsweise ein USB Stick dienen.

Fig. 2 zeigt die Anordnung 31 und eine Bearbeitungsvorrichtung 6, welche die vorher angebrachten Markierungen 4 erfasst und abfährt, um die markierten Bereiche des Betonteiles 1 zu bearbeiten. Hier können beispielsweise Teilabschnitte 7 geschaffen werden, indem an einer Zuschnittslinie 3 einzelne Segmente aus dem gesamten Strang herausgetrennt werden. Ausschnitte 2 wie beispielsweise Fensterdurchbrüche werden ausgeschnitten.

Als Bearbeitungsvorrichtung 6 kann beispielsweise eine Trennvorrichtung (Säge), eine Poliervorrichtung, eine Schleifvorrichtung, eine Setzvorrichtung für Schalungen, eine Bohr- oder Fräsvorrichtung, eine Prägevorrichtung, eine Reinigungs- oder Bürstvorrichtung oder andere Vorrichtungen aus dem Stand der Technik vorgesehen sein.

Die Bearbeitungsvorrichtung 6 kann über eine Datenübertragung 9 Daten, vorzugsweise zusätzliche Daten 19 in Form von Konstruktionsdaten (wie zum Beispiel PXML Daten, CAD Daten, Vektorgraphiken, etc...) von einer Steuereinrichtung 8 empfangen und auch Daten an die Steuereinrichtung 8 zurücksenden. Anhand dieser Datenübertragung 9 kann die Bearbeitungsvorrichtung 6 vorzugsweise vollautomatisch die Bearbeitung am Betonteil 1 durchführen.

Die Datenübertragung 9 kann über eine Datenübertragungsvorrichtung 24 an der Steuereinrichtung 8 und eine Datenempfangsvorrichtung 21 an der Bearbeitungsvorrichtung 6 entweder drahtlos und/oder via Kabel und/oder über einen Datenspeicher 35 erfolgen. Als Datenspeicher 35 kann beispielsweise ein USB Stick dienen.

Fig. 3 zeigt im Detail, wie ein Betonteil 1 durch eine Markierungsvorrichtung 5, vorzugsweise einen selbstfahrenden, datengesteuerten Plotter, an den zu bearbeitenden Stellen durch Markierungen 4 markiert wird. Dies erfolgt über die zusätzlichen Daten 19 aus der Steuereinrichtung 8. Die durch die zusätzlichen Daten 19 vorgegebenen, noch nicht gedruckten Markierungen 4' werden dabei von der Markierungsvorrichtung 5 abgefahren und zu erfassbaren Markierungen 4 gemacht.

Im nächsten Verfahrensschritt und/oder auch parallel dazu kann die vorzugsweise selbstfahrende und automatisierte wenigstens eine Bearbeitungsvorrichtung 6 die Markierungen 4 abfahren und die gewünschte Bearbeitung vornehmen. Die Erfassung der Markierungen 4 erfolgt über die Markierungserfassungsvorrichtung 11, welche vorzugsweise durch einen Sensor, wie Formerkennungs- und/oder Bildsensor, ausgebildet ist.

Die Daten der Markierungserfassungsvorrichtung 11 werden in einer Datenverarbeitungsvorrichtung 12 zu Markierungsdaten 20 umgewandelt oder verarbeitet. Die Datenverarbeitungsvorrichtung 12 kann auch die zusätzlichen Daten 19 empfangen und diese mit den gewonnenen Markierungsdaten 20 vergleichen um Fehler ausschließen zu können oder eine exaktere Bearbeitung durch die Bearbeitungsvorrichtung durchführen lassen zu können. Im Ernstfall kann bei einer Differenz zwischen den Markierungsdaten 20 und den zusätzlichen Daten 19 auch eine Bearbeitung gestoppt werden, um keinen Ausschuss zu produzieren.

Die Bearbeitungsvorrichtung 6 kann eine eigene Antriebsvorrichtung 22 aufweisen, welche ein autonomes Verfahren der Bearbeitungsvorrichtung 6 auf der zu bearbeitenden Fläche ermöglicht. Geführt oder gesteuert wird sie dabei durch die Markierungen 4 und/oder die zusätzlichen Daten 19

Im Falle der Fig. 3 kann die Bearbeitungsvorrichtung 6 ein Schneidwerkzeug 23 aufweisen, welches das Zerschneiden oder Trennen des Untergrundes - in diesem Fall das Betonteil 1 - ermöglicht.

Anstelle eines Schneidwerkzeuges 23 könnten jedoch auch andere Werkzeuge, wie beispielsweise ein Betonsauger, ein Bohr- oder Fräskopf, eine Bürste, ein Schleifkopf oder ein anderes aus dem Stand der Technik bekanntes Werkzeug oder auch Kombinationen daraus vorgesehen sein. Es können auch mehrere, vorzugsweise angetriebene, Werkzeuge an einer Bearbeitungsvorrichtung 6 angeordnet sein. Die Bearbeitungsvorrichtung 6 kann auch ein vielseitig einsetzbarer, vorzugsweise mobil auf oder über den Betonteilen bewegbarer Industrieroboter sein.

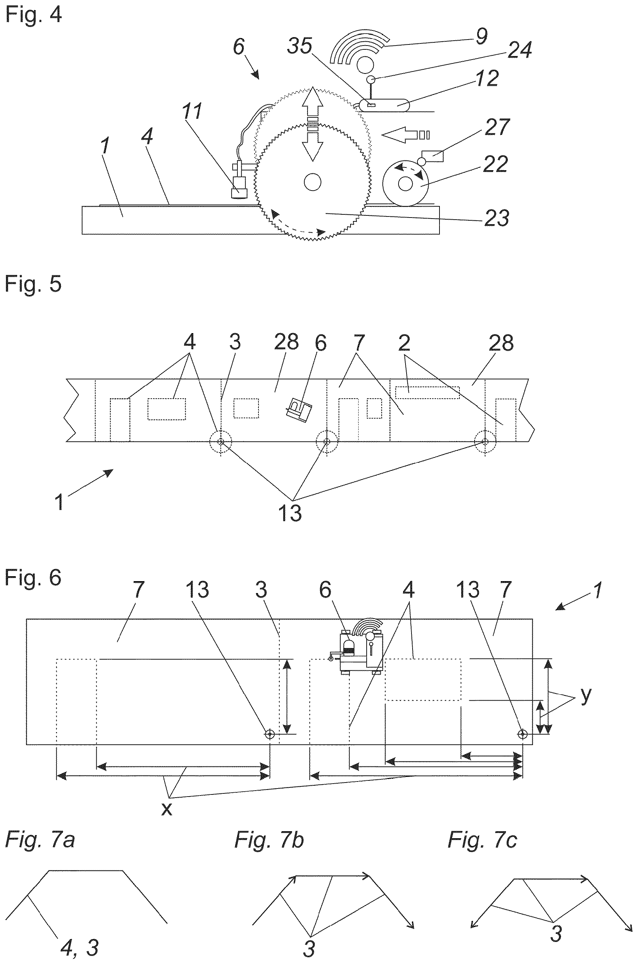

Fig. 4 zeigt als Beispiel für eine Bearbeitungsvorrichtung 6 eine Trennvorrichtung mit einem Schneidwerkzeug 23 - vorzugsweise einem betriebenen Sägeblatt. Das Schneidwerkzeug 23 schneidet automatisiert in das Betonteil 1 ein, wobei die Bearbeitungsvorrichtung 6 durch eine Antriebsvorrichtung 22 auf dem Betonfertigteil 1 verfahren werden kann. Das Verfahren und Schneiden erfolgt dabei entlang der Markierung 4, welche durch die Markierungserfassungsvorrichtung 11 erfasst wird. Die erfassten Daten der Markierungserfassungsvorrichtung 11 werden hierzu an die Datenverarbeitungsvorrichtung 12 weitergeleitet. Diese ist mit der Antriebsvorrichtung 22 und dem Antrieb des Schneidwerkzeuges 23 verbunden und kann diese steuern. Zusätzlich kann eine Wegmessvorrichtung 27 vorgesehen sein, welche den zurückgelegten Weg und somit auch die Position der Bearbeitungsvorrichtung 6 erfassen kann. Die dabei gewonnenen Daten werden auch an die Datenverarbeitungsvorrichtung 12 weitergeleitet.

An der Datenverarbeitungsvorrichtung 12 ist die Datenübertragungsvorrichtung 24 angeschlossen, welche die Datenübertragung 9 zur Steuereinrichtung 8 herstellt. Daten können auch mittels Datenspeicher 35 übertragen werden.

Fig. 5 zeigt, wie für jeden einzelnen Teilabschnitt 7 des im Strang gegossenen Betons eine eigene Referenzmarkierung 13. In anderen Worten kann jedes Betonfertigteilprodukt 28 eine eigene Referenzmarkierung 13 aufweisen, von welcher aus die weiteren Markierungen 4 beispielsweise für Zuschnitte 3 oder Ausschnitte 4 und/oder die Bearbeitung durch die Bearbeitungsvorrichtung 6 ausgehen. Durch diese Referenzmarkierungen 13 werden Summenfehler oder Abweichungen bei fortschreitender Bearbeitung des Stranges minimiert oder verhindert.

Die Fig. 6 zeigt detailliert, wie die Markierungen 4 ausgehend von der Referenzmarkierung 13 über x und/oder y Werte geschaffen wurden. Jeder Teilabschnitt 7, welcher ein zukünftiges Betonfertigteilprodukt 28 ausbilden wird, hat eine eigene Referenzmarkierung 13 von der die Datensätze als x Werte und/oder y Werte für die Markierungen 4 jenes Teilabschnittes ausgehen. So bekommt jeder Teilabschnitt 7 nur die für ihn zugeschnittenen Werte als zusätzliche Daten 19 vermittelt, was Summenfehler oder Abweichungen verhindert. Diese Abweichungen würden entstehen, wenn am Anfang des Stranges nur ein Referenzpunkt bestehen würde, von welchem aus die gesamte Bearbeitung der einzelnen Teilabschnitte 7 erfolgt.

Fig. 7a zeigt einen Ausschnitt 3 in einem Betonteil, wie er durch eine Säge durchgeführt werden sollte. Dieser kann in zwei verschiedenen Arten durchgeführt werden.

Das Verfahren der Bearbeitungsvorrichtung 6 muss nicht immer in die gleiche Richtung erfolgen wie auch das Verfahren der Markierungsvorrichtung 4. Verfährt die Bearbeitungsvorrichtung 6 - im Beispiel der Figuren 7a bis 7c im selben Richtungssinn wie zuvor die Markierungsvorrichtung 5, da die selben Daten (zusätzliche Daten 19) verwendet werden, kann es auftreten, dass das Sägeblatt zwischen Gleichschnitt und Gegenschnitt (Schnittrichtung des Sägeblattes mit oder gegen die Vorschubrichtung der Säge) variieren muss. Hier kann erhöhter Verschleiß am Werkzeug auftreten, was bei der Fig. 7b der Fall wäre. Beim ständigen Wechsel der Bearbeitungsvorrichtung 6 um den Verschleiß zu minimieren - also eine optimale Schnittrichtung zu wählen, kann es sein, dass mehr Zeit in Anspruch genommen werden muss. Dies zeigt die Fig. 7c. Somit können sich die Taktzeiten verlängern.

Um einen Kompromiss aus Verschleiss und Taktzeiten zu finden, kann die Bearbeitungsvorrichtung 6 beim Anfahren der Markierungen 4 zum Erstellen der Zuschnitte 3 beispielsweise die zusätzlichen Daten 19 ausblenden und sich nur an den Markierungen 4 orientieren, um eine geeignete Bearbeitung zu wählen (korrekte Schnittrichtung oder Ausrichtung).

Es kann auch eine Person anhand der Markierungen 4 diese Entscheidung vor Ort treffen und die Maschine entsprechend an die Markierungen 4 anpassen.

Generell kann in so einem Fall entschieden werden, ob der Schnitt oder die Bearbeitung anhand der zusätzlichen Daten 19 und/oder anhand der Markierungen 4 durchgeführt werden sollte.

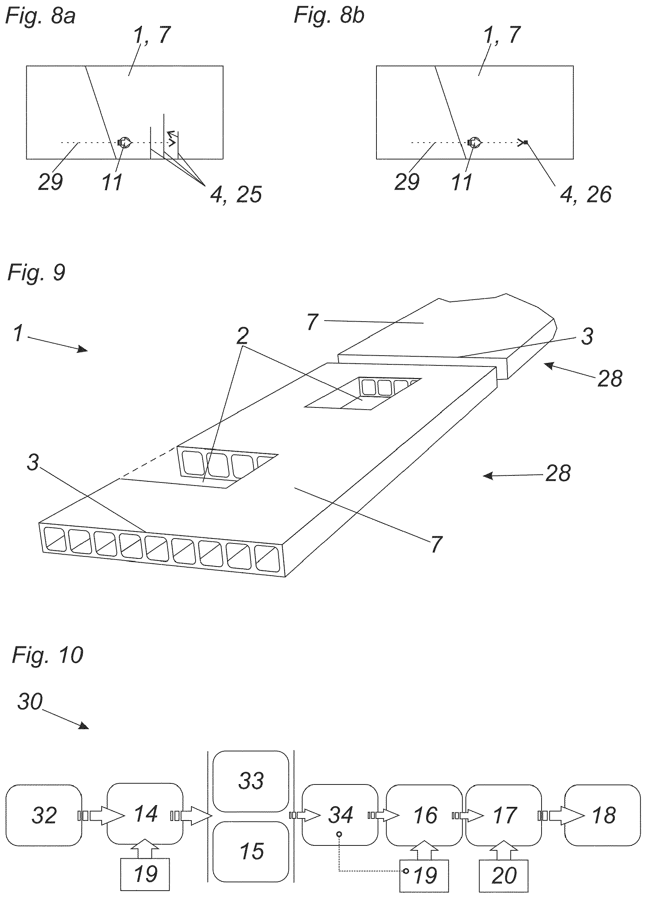

Die Fig. 8a zeigt das Detektieren der Markierungen 4 - in diesem Falle durch Linien ausgebildet - durch die Markierungserfassungsvorrichtung 11. Diese verfährt entlang einer Erfassungsbewegung 29, bis sie eine Markierung 4 in Form zumindest einer Linie 25 detektiert. Je nach Ausführung der Markierungserfassungsvorrichtung 11 müssen eine oder mehrere Linien 25 aufgebracht werden, um eine Reaktion der Markierungserfassungsvorrichtung 11 gewährleisten zu können. Normale Sensoren benötigen oftmals mehrere Linien als Referenz um sich einfinden zu können. Dies wird in der Fig. 8a durch die einzelnen Pfeile dargestellt.

Fig 8b. zeigt einen "Hybridsensor" als Markierungserfassungsvorrichtung 11, der in der Lage ist, zweidimensionale Formen 26 wie Kreise, Rechtecke, QR Codes etc zu erkennen. Hier müssen nicht mehrere Linien 25 angefahren werden, wie in der Fig. 8a gezeigt.

Fig. 9 zeigt ein Betonfertigteilprodukt 28, in diesem Ausführungsbeispiel eine Hohldecke als Strangprofil, vorzugsweise bewährt oder vorgespannt (Stahlbeton). An den Zuschnitten 3 wurden die einzelnen Teilabschnitte 7, welche nach der endgültigen Bearbeitung die Betonfertigteilprodukte 28 ausbilden, aus dem Strangprofil herausgetrennt. Ausschnitte 2 können ebenfalls vorgesehen sein. Dies sind im Falle einer Hohldecke beispielsweise Schachtdurchführungen, Treppenaufgänge, Kamindurchführungen oder dergleichen.

Hohlprofile wie das Betonfertigteilprodukt 28 können beispielsweise jedoch auch als Wandelemente verwendet werden, wobei die Ausschnitte 2 beispielsweise für Türen oder Fenster vorgesehen sein können.

Durch das Verfahren 30 oder die Anordnung 31 wird das Herstellen von Betonfertigteilprodukt 28, mit welchen komplette Gebäude errichtet werden können, stark vereinfacht, da die Betonfertigteilprodukt 28 effizient und mit hoher Genauigkeit produziert werden können.

Die Fig. 10 zeigt die Verfahrensschritte des Verfahrens 30. Beginnend mit der Bereitstellung - Betonteil 32 bei welchem das Betonteil 1 für die weitere Bearbeitung vorbereitet wird. Dies kann beispielsweise durch Stranggießen erfolgen.

Als nächster Schritt folgt der Markiervorgang 14, eventuell unter Einfluss der zusätzlichen Daten 19, welche die Markierungsvorrichtung 5 automatisiert die Markierungen 4 auftragen lassen. Hierbei können auch die Referenzmarkierungen 13 aufgebracht werden.

Als weiterer Schritt ist die "Bereitstellung - Bearbeitungsvorrichtung 33" vorgesehen, bei welchem die Zuordnung der Bearbeitungsvorrichtung 6 auf dem Betonteil 1 erfolgt. Die Bearbeitungsvorrichtung 6 wird beispielsweise über eine Rampe auf das Betonteil 1 aufgefahren, mit einem Kran auf das Betonteil aufgesetzt, etc. Die "Bereitstellung - Bearbeitungsvorrichtung 33" kann bereits unter Einfluss von den zusätzlichen Daten 19 erfolgen, sodass die Bearbeitungsvorrichtung 6 automatisiert eine Art Bereitschaftsstellung am Betonteil 1 einnimmt. Es kann aber auch eine einfache manuelle Positionierung 15 der Bearbeitungsvorrichtung 6 durch einen Arbeiter erfolgen.

Es kann aber auch vorgesehen sein, dass die Bearbeitungsvorrichtung 6 nicht direkt auf dem Betonteil verfährt, sondern beispielsweise auf Schienen, welche neben dem Betonteil angeordnet sind. Dabei kann die Bearbeitungsvorrichtung 6 an einem Ausleger oder Arm angeordnet sein, welcher an einem schienengebundenen Fahrwerk ausgebildet ist. Die Bearbeitungsvorrichtung 6 kann sich relativ zum schienengebundenen Fahrwerk und damit gleichzeitig relativ zum Betonteil bewegen, um das Betonteil zu bearbeiten.

Als nächster Schritt folgt die "Bereitstellung - Daten 24", wobei hier die zusätzlichen Daten 19 verwendet werden, welche die Konstruktion des Betonfertigteilproduktes 28 beinhalten. Bei diesem Schritt werden die zusätzlichen Daten 19 über die oben genannten Möglichkeiten an die Bearbeitungsvorrichtung 6 übertragen.

Die Bearbeitungsvorrichtung 6 positioniert sich anhand der zusätzlichen Daten 19 im Schritt "Anfahren - Daten 16" und beginnt dabei bereits durch die Markierungserfassungsvorrichtung 11 eine Markierung 4 zu suchen.

Wird diese Markierung 4 gefunden erfolgt der Schritt "Positionierung - Markierungsdaten 17", bei welchem die Bearbeitungsvorrichtung sich anhand der Markierungen 4 ausrichtet um anschließend die Bearbeitung an der markierten Position stattfinden zu lassen. Dabei kann wie bereits oben geschildert ein Vergleich zwischen den Markierungsdaten 20 und den zusätzlichen Daten 19 erfolgen, um eine exaktere Bearbeitung zu erzielen oder im Falle einer Differenz zwischen den zwei Datensätzen eine Bearbeitung zu verhindert, um Ausschuss zu minimieren.

Als weiterer Schritt erfolgt der Bearbeitungsvorgang 18, welcher vorzugsweise als Schneidvorgang durch eine Sägevorrichtung ausgebildet ist. Nach dem Bearbeitungsvorgang 18 können noch weitere Schritte vorgesehen sein, um das Betonfertigteilprodukt 28 fertigstellen zu können.

### Bezugszeichenliste:

- 1: Betonteil
- 2: Ausschnitt
- 3: Zuschnitt
- 4: Markierung (4' ist gedachte, strichlierte Markierung durch Datenbank vorgegeben)
- 5: Markierungsvorrichtung (vorzugsweise selbstfahrender Plotter, datengesteuert, automatisiert)
- 6: Bearbeitungsvorrichtung (vorzugsweise Trennvorrichtung wie eine selbstfahrende Säge, datengesteuert, automatisiert)
- 7: Teilabschnitt
- 8: Steuereinrichtung (Rechner mit Datenübertragungseinrichtung)
- 9: Datenübertragung
- 10: Person
- 11: Markierungserfassungsvorrichtung (vorzugsweise Sensor, Formerkennungs- und/oder Linienerkennungssensor)
- 12: Datenverarbeitungvorrichtung
- 13: Referenzmarkierung
- 14: Markiervorgang
- 15: manuelle Positionierung der Säge (falls notwendig)
- 16: Anfahren Daten
- 17: automatisierte Positionierung Markierungsdaten 20
- 18: Bearbeitungsvorgang, vorzugsweise Schneidvorgang
- 19: zusätzliche Daten (PXML Daten, CAD Daten, Vektorgraphikdaten,... aus Datenbank an Steuereinrichtung 8)
- 20: Markierungsdaten (von der Erfassungsvorrichtung 11)
- 21: Datenempfangsvorrichtung
- 22: Antriebsvorrichtung
- 23: Schneidwerkzeug
- 24: Datenübertragungsvorrichtung
- 25: Linie
- 26: zweidimensionale Form
- 27: Wegmessvorrichtung
- 28: Betonfertigteilprodukt
- 29: Erfassungsbewegung
- 30: Verfahren
- 31: Anordnung
- 32: Bereitstellung Betonteil
- 33: Bereitstellung Bearbeitungsvorrichtung
- 34: Bereitstellung Daten
- 35: Datenspeicher

## Patentansprüche

1. Verfahren (30) zum Bearbeiten, insbesondere Zertrennen, wenigstens eines Betonteils (1), insbesondere wenigstens eines Strangprofils zur Herstellung eines Betonfertigteilprodukts (28), wie z.B. einer Hohldecke, mit folgenden Verfahrensschritten:
- es wird wenigstens ein, vorzugsweise mittels eines Extruders oder Gleitschalungsfertigers hergestelltes, Betonteil (1) bereitgestellt,
- am wenigstens einen Betonteil (1) wird wenigstens eine Markierung (4) angebracht, vorzugsweise mittels einer automatischen Markierungsvorrichtung (5) und/oder manuell,
- es wird wenigstens eine Bearbeitungsvorrichtung (6), vorzugsweise eine Trennvorrichtung, zum Bearbeiten des wenigstens einen Betonteils (1) relativ zum wenigstens einen Betonteil (1) angeordnet,
- die wenigstens eine Markierung (4) wird mittels wenigstens einer Markierungserfassungsvorrichtung (11) erfasst und es werden die dabei generierten Markierungsdaten (20) an die wenigstens eine Bearbeitungsvorrichtung (6) übermittelt,
- das wenigstens eine Betonteil (1) wird unter Einbeziehung der generierten Markierungsdaten (20) mittels der wenigstens einen Bearbeitungsvorrichtung (6) bearbeitet, **dadurch gekennzeichnet, dass**
- in einem weiteren Verfahrensschritt zusätzliche Daten (19) zur Positionierung der wenigstens einen Bearbeitungsvorrichtung (6) relativ zum wenigstens einen Betonteils (1) und/oder zur Bearbeitung des wenigstens einen Betonteils (1) durch die wenigstens eine Bearbeitungsvorrichtung (6) bereitgestellt werden, wobei das wenigstens eine Betonteil (1) unter Einbeziehung dieser zusätzlichen Daten (19) mittels der wenigstens einen Bearbeitungsvorrichtung (6) bearbeitet wird.

2. Verfahren (30) nach Anspruch 1, wobei es sich bei den zusätzlichen Daten (19) um Konstruktionsdaten des wenigstens einen Betonteils (1) und/oder des herzustellenden Betonfertigteilprodukts handelt.

3. Verfahren (30) nach Anspruch 1 oder 2, wobei die zusätzlichen Daten (19) in einem weiteren Verfahrensschritt mit den Markierungsdaten (20) verglichen werden.

4. Verfahren (30) nach einem der Ansprüche 1 bis 3, wobei die zusätzlichen Daten (19) von einer zentralen Steuereinrichtung (8) bereitgestellt und, vorzugsweise über wenigstens eine Datenübertragungsvorrichtung (24), an die wenigstens eine Bearbeitungsvorrichtung (6), vorzugsweise drahtlos, und/oder mittels wenigstens eines Datenspeichers, z.B. eines USB-Sticks, übermittelt werden.

5. Verfahren (30) nach einem der Ansprüche 1 bis 4, wobei die wenigstens eine Markierung (4)
- wenigstens einen von der wenigstens einen Bearbeitungsvorrichtung (6) zu bearbeitenden Bereich des Betonteils (1), vorzugsweise wenigstens einen Ausschnitt (2) oder wenigstens einen Zuschnitt (3), markiert, und/oder
- als Referenzmarkierung (13) ausgebildet ist, welche für einen Teilabschnitt (7) des wenigstens einen Betonteils (1) verwendet wird, vorzugsweise wobei der Teilabschnitt (7) des wenigstens einen Betonteils (1) genau eine Referenzmarkierung (13) aufweist, und/oder
- wenigstens eine Linie (25) und/oder zweidimensionale Form (26) umfasst.

6. Verfahren (30) nach einem der Ansprüche 1 bis 5, wobei die wenigstens eine Markierung (4) durch den Auftrag wenigstens einer Markierungsfarbe am wenigstens einen Betonteil (1) angebracht wird, vorzugsweise wobei die wenigstens eine Markierungsfarbe luminophore Partikel umfasst.

7. Verfahren (30) nach einem der Ansprüche 1 bis 6, wobei die wenigstens eine Markierungserfassungsvorrichtung (11) dazu ausgebildet ist, für das menschliche Auge sichtbares oder unsichtbares Licht auszusenden und/oder zu empfangen.

8. Verfahren (30) nach einem der Ansprüche 1 bis 7, wobei die wenigstens eine Markierungserfassungsvorrichtung (11) an der wenigstens einen Bearbeitungsvorrichtung (6) angeordnet ist und mit der wenigstens einen Bearbeitungsvorrichtung (6) mitbewegt wird.

9. Verfahren (30) nach einem der Ansprüche 1 bis 8, wobei die wenigstens eine Bearbeitungsvorrichtung (6)
- wenigstens eine Wegmessvorrichtung (27), vorzugsweise wenigstens einen Drehgeber, umfasst, mit welcher der von der wenigstens eine Bearbeitungsvorrichtung (6) relativ zum wenigstens einen Betonteil (1) zurückgelegte Weg gemessen wird, und/oder
- wenigstens eine Datenempfangsvorrichtung (21) aufweist, über welche zusätzliche Daten (19) zur Positionierung der wenigstens einen Bearbeitungsvorrichtung (6) relativ zum wenigstens einen Betonteils (1) und/oder zur Bearbeitung des wenigstens einen Betonteils (1) durch die wenigstens eine Bearbeitungsvorrichtung (6) empfangen werden, und/oder
- wenigstens eine prozessorgesteuerte Datenverarbeitungsvorrichtung (12) aufweist, über welche die wenigstens eine Bearbeitungsvorrichtung (6) gesteuert wird, und/oder
- wenigstens eine Antriebsvorrichtung (22) aufweist, mit welcher die wenigstens eine Bearbeitungsvorrichtung (6) relativ zum wenigstens einen Betonteil (1) bewegt wird, und/oder
- wenigstens ein Schneidwerkzeug (23) aufweist, mit welchem das wenigstens eine Betonteil (1) an wenigstens einer vorbestimmten Position zertrennt wird.

10. Verfahren zur Herstellung wenigstens eines Betonfertigteilprodukts (28), insbesondere wenigstens einer Hohldecke, wobei das wenigstens eine Betonfertigteilprodukt (28) mittels des Verfahrens (30) zum Bearbeiten, insbesondere Zertrennen, wenigstens eines Betonteils (1) nach einem der Ansprüche 1 bis 9 aus dem wenigstens einen Betonteil (1) gewonnen wird.

11. Anordnung (31) zum Bearbeiten, insbesondere Zertrennen, wenigstens eines Betonteils (1), insbesondere wenigstens eines Strangprofils zur Herstellung eines Betonfertigteilprodukt (28), wie z.B. einer Hohldecke, wobei die Anordnung (31) dazu ausgebildet und eingerichtet ist, das wenigstens eine Betonteil (1) gemäß dem Verfahren (30) nach einem der Ansprüche 1 bis 9 zu bearbeiten, insbesondere zu zertrennen, wobei die Anordnung (31) wenigstens eine Bearbeitungsvorrichtung (6) zum Bearbeiten des wenigstens einen Betonteils (1) aufweist, wobei die Anordnung (31) wenigstens eine Markierungserfassungsvorrichtung (11) zur Erfassung wenigstens einer auf dem Betonteil (1) angebrachten Markierung (4) aufweist, **dadurch gekennzeichnet, dass**
die Anordnung (31) eine zentrale Steuereinrichtung (8) umfasst, wobei zusätzliche Daten (19) zur Positionierung der wenigstens einen Bearbeitungsvorrichtung (6) relativ zum wenigstens einen Betonteils (1) und/oder zur Bearbeitung des wenigstens einen Betonteils (1) durch die wenigstens eine Bearbeitungsvorrichtung (6) von der zentralen Steuereinrichtung (8) bereitstellbar sind.

12. Anordnung (31) nach Anspruch 11, wobei die Anordnung (31)
- wenigstens einen Extruder oder Gleitschalungsfertiger zur Herstellung des wenigstens einen Betonteils (1) aufweist, und/oder
- wenigstens eine automatische Markierungsvorrichtung (5) zur Anbringung wenigstens einer Markierung (4) am wenigstens einen Betonteil (1) aufweist.

13. Anordnung (31) nach Anspruch 11 oder 12, wobei
- die wenigstens eine Markierungserfassungsvorrichtung (11) an der wenigstens einen Bearbeitungsvorrichtung (6) angeordnet ist, und/oder
- dazu ausgebildet ist, für das menschliche Auge sichtbares oder unsichtbares Licht auszusenden und/oder zu empfangen, und/oder
- dazu ausgebildet ist, wenigstens eine Linie (25) und/oder zweidimensionale Form (26) zu erfassen.

14. Anordnung (31) nach einem der Ansprüche 11 bis 13, wobei die wenigstens eine Bearbeitungsvorrichtung (6)
- wenigstens eine Wegmessvorrichtung (27), vorzugsweise wenigstens einen Drehgeber, umfasst, mit welcher der von der wenigstens eine Bearbeitungsvorrichtung (6) relativ zum wenigstens einen Betonteil (1) zurückgelegte Weg messbar ist, und/oder
- wenigstens eine Datenempfangsvorrichtung (21) aufweist, über welche zusätzliche Daten (19) zur Positionierung der wenigstens einen Bearbeitungsvorrichtung (6) relativ zum wenigstens einen Betonteils (1) und/oder zur Bearbeitung des wenigstens einen Betonteils (1) durch die wenigstens eine Bearbeitungsvorrichtung (6) empfangbar sind, und/oder
- wenigstens eine prozessorgesteuerte Datenverarbeitungsvorrichtung (12) aufweist, über welche die wenigstens eine Bearbeitungsvorrichtung (6) steuerbar ist, und/oder
- wenigstens eine Antriebsvorrichtung (22) aufweist, mit welcher die wenigstens eine Bearbeitungsvorrichtung (6) relativ zum wenigstens einen Betonteil (1) bewegbar ist, und/oder
- wenigstens ein Schneidwerkzeug (23) aufweist, mit welchem das wenigstens eine Betonteil (1) an wenigstens einer vorbestimmten Position zertrennbar ist.

15. Anordnung (31) nach einem der Ansprüche 11 bis 14, wobei die Anordnung (31) wenigstens eine Datenübertragungsvorrichtung (24) aufweist, mit welcher die zusätzlichen Daten (19) an die wenigstens eine Bearbeitungsvorrichtung (6), vorzugsweise drahtlos, und/oder mittels wenigstens eines Datenspeichers, z.B. eines USB-Sticks, übermittelbar sind.

## Claims

1. A method (30) of machining, in particular severing, at least one concrete part (1), in particular at least one extruded profile for the production of a precast concrete product (28) like for example a hollow ceiling, comprising the following method steps:
- there is provided at least one concrete part (1) preferably produced by means of an extruder or slipform production apparatus,
- at least one marking (4) is applied to the at least one concrete part (1), preferably by means of an automatic marking apparatus (5) and/or manually,
- at least one machining apparatus (6), preferably a cutting apparatus, for machining the at least one concrete part (1), is arranged relative to the at least one concrete part (1),
- the at least one marking (4) is detected by means of at least one marking detection apparatus (11) and the marking data (20) generated in that case are transmitted to the at least one machining apparatus (6), and
- the at least one concrete part (1) is machined using the generated marking data (20) by means of the at least one machining apparatus (6), **characterized in that**
- in a further method step additional data (19) are provided for positioning the at least one machining apparatus (6) relative to the at least one concrete part (1) and/or for processing the at least one concrete part (1) by the at least one machining apparatus (6), wherein the at least one concrete part (1) is machined using those additional data (19) by means of the at least one machining apparatus (6).

2. The method (30) as set forth in claim 1, wherein the additional data (19) involve construction data of the at least one concrete part (1) and/or the precast concrete product to be produced.

3. The method as set forth in claim 1 or 2, wherein the additional data (19) are compared to the marking data (20) in a further method step.

4. The method (30) as set forth in one of claims 1 through 3, wherein the additional data (19) are provided by a central control device (8) and transmitted, preferably by way of at least one data transmission apparatus (24), to the at least one machining apparatus (6), preferably wirelessly, and/or by means of at least one data memory, for example a USB stick.

5. The method (30) as set forth in one of claims 1 through 4, wherein the at least one marking (4)
- marks at least one region of the concrete part (1), that is to be machined by the at least one machining apparatus (6), preferably at least one cut-out (2) or at least one customization cut (3), and/or
- is in the form of a reference marking (13) which is used for a portion (7) of the at least one concrete part (1), preferably wherein the portion (7) of the at least one concrete part (1) has precisely one reference marking (13), and/or
- includes at least one line (25) and/or two-dimensional shape (26).

6. The method (30) as set forth in one of claims 1 through 5, wherein the at least one marking (4) is applied by the application of at least one marking paint to the at least one concrete part (1), preferably wherein the at least one marking paint includes luminophore particles.

7. The method (30) as set forth in one of claims 1 through 6, wherein the at least one marking detection apparatus (11) is adapted to emit and/or receive light which is invisible or visible to the human eye.

8. The method (30) as set forth in one of claims 1 through 7, wherein the at least one marking detection apparatus (11) is arranged at the at least one machining apparatus (6) and also moves with the at least one machining apparatus (6).

9. The method (30) as set forth in one of claims 1 through 8, wherein the at least one machining apparatus (6)
- includes at least one travel measuring apparatus (27), preferably at least one rotary encoder, with which the travel distance covered by the at least one machining apparatus (6) relative to the at least one concrete part (1) is measured, and/or
- has at least one data receiving apparatus (21), by way of which additional data (19) for positioning the at least one machining apparatus (6) relative to the at least one concrete part (1) and/or for machining the at least one concrete part (1) by the at least one machining apparatus (6) are received, and/or
- has at least one processor-controlled data processing apparatus (12), by way of which the at least one machining apparatus (6) is controlled, and/or
- has at least one drive apparatus (22), with which the at least one machining apparatus (6) is moved relative to the at least one concrete part (1), and/or
- has at least one cutting tool, with which the at least one concrete part (1) is severed at at least one predetermined position.

10. A method of producing at least one precast concrete product (28), in particular at least one hollow ceiling, wherein the at least one precast concrete product (28) is obtained by means of the method (30) of machining, in particular severing, at least one concrete part (1), as set forth in one of claims 1 through 9, from the at least one concrete part (1).

11. An arrangement (31) for machining, in particular severing, at least one concrete part (1), in particular at least one extrusion profile for the production of a precast concrete product (28) like for example a hollow ceiling, wherein the arrangement (31) is designed and adapted to machine, in particular sever, the at least one concrete part (1) according to the method (30) as set forth in one of claims 1 through 9, wherein the arrangement (31) has at least one machining apparatus (6) for machining the at least one concrete part (1), wherein the arrangement (31) has at least one marking detection apparatus (11) for detecting at least one marking (4) arranged on the concrete part (1), **characterized in** the arrangement (31) includes a central control device (8), wherein additional data (19) for positioning the at least one machining apparatus (6) relative to the at least one concrete part (1) and/or for machining the at least one concrete part (1) by the at least one machining apparatus (6) can be provided by the central control device (8).

12. The arrangement (31) as set forth in claim 11, wherein the arrangement (31)
- has at least one extruder or slipform production apparatus for the production of the at least one concrete part (1), and/or
- has at least one automatic marking apparatus (5) for applying at least one marking (4) to the at least one concrete part (1).

13. The arrangement (31) as set forth in claim 11 or claim 12 wherein part (1), wherein
- the at least one marking detection apparatus (11) is arranged at the at least one machining apparatus (6), and/or
- is adapted to emit and/or receive light which is invisible or visible to the human eye, and/or
- is adapted to detect at least one line (25) and/or two-dimensional shape (26).

14. The arrangement (31) as set forth in one of claims 11 through 13, wherein the at least one machining apparatus (6)
- includes at least one travel measuring apparatus (27), preferably at least one rotary encoder, with which the travel distance covered by the at least one machining apparatus (6) relative to the at least one concrete part (1) is measured, and/or
- has at least one data receiving apparatus (21), by way of which additional data (19) for positioning the at least one machining apparatus (6) relative to the at least one concrete part (1) and/or for machining the at least one concrete part (1) by the at least one machining apparatus (6) are received, and/or
- at least one processor-controlled data processing apparatus (12), by way of which the at least one machining apparatus (6) is controllable, and/or
- has at least one drive apparatus (22), with which the at least one machining apparatus (6) is moved relative to the at least one concrete part (1), and/or
- has at least one cutting tool (23), with which the at least one concrete part (1) is severed at at least one predetermined position.

15. The arrangement (31) as set forth in one of claims 11 through 14, wherein the arrangement (31) has at least one data transmission apparatus (24), with which the additional data (19) can be communicated to the at least one machining apparatus (6), preferably wirelessly, and/or by means of at least one data memory, for example a USB stick.

## Revendications

1. Procédé (30) pour usiner, en particulier découper, au moins une pièce de béton (1), en particulier au moins un profilé extrudé pour la fabrication d'un produit préfabriqué en béton (28), comme par exemple un faux plafond, avec les étapes de procédé suivantes :
- au moins une pièce de béton (1), fabriquée de préférence au moyen d'une extrudeuse ou machine à coffrage glissant, est fournie,
- au moins un marquage (4) est posé sur au moins une pièce de béton (1), de préférence au moyen d'un dispositif de marquage automatique (5) et/ou manuellement,
- au moins un dispositif d'usinage (6), de préférence un dispositif de séparation, pour l'usinage de la au moins une pièce de béton (1) est disposé par rapport à au moins une pièce de béton (1),
- le au moins un marquage (4) est détecté au moyen d'au moins un dispositif de détection de marquage (11) et les données de marquage (20) ainsi générées sont transmises à le au moins un dispositif d'usinage (6),
- la au moins une pièce de béton (1) est usinée en tenant compte des données de marquage (20) générées au moyen du au moins un dispositif d'usinage (6), **caractérisé en ce que**
- dans une autre étape de procédé des données additionnelles (19) sont fournies pour le positionnement du au moins un dispositif d'usinage (6) par rapport à l'au moins une pièce de béton (1) et/ou pour l'usinage de la au moins une pièce de béton (1) par le au moins un dispositif d'usinage (6), dans lequel la au moins une pièce de béton (1) est usinée en tenant compte de ces données additionnelles (19) au moyen du au moins un dispositif d'usinage (6).

2. Procédé (30) selon la revendication 1, dans lequel il s'agit pour les données additionnelles (19) de données de conception de la au moins une pièce de béton (1) et/ou du produit préfabriqué en béton à fabriquer.

3. Procédé (30) selon la revendication 1 ou 2, dans lequel les données additionnelles (19) sont comparées aux données de marquage (20) dans une autre étape de procédé.

4. Procédé (30) selon l'une quelconque des revendications 1 à 3, dans lequel les données additionnelles (19) sont fournies par un dispositif de commande centrale (8) et transmises de préférence par l'intermédiaire d'au moins un dispositif de transmission de données (24) à le au moins un dispositif d'usinage (6), de préférence sans fil, et/ou au moyen d'au moins une mémoire de données, par exemple une clé USB.

5. Procédé (30) selon l'une quelconque des revendications 1 à 4, dans lequel le au moins un marquage (4)
- marque au moins une zone de la pièce de béton (1) destinée à être usinée par le au moins un dispositif d'usinage (6), de préférence au moins une découpe (2) ou au moins une pièce découpée (3), et/ou
- est réalisé en tant que marquage de référence (13), lequel est utilisé pour une section partielle (7) de la au moins une pièce de béton (1), de préférence dans lequel la section partielle (7) de la au moins une pièce de béton (1) présente exactement un marquage de référence (13), et/ou
- comprend au moins une ligne (25) et/ou forme bidimensionnelle (26).

6. Procédé (30) selon l'une quelconque des revendications 1 à 5, dans lequel le au moins un marquage (4) est posé par l'application d'au moins une encre de marquage sur la au moins une pièce de béton (1), de préférence dans lequel la au moins une encre de marquage comprend des particules luminophores.

7. Procédé (30) selon l'une quelconque des revendications 1 à 6, dans lequel le au moins un dispositif de détection de marquage (11) est réalisé pour émettre et/ou pour recevoir une lumière visible ou invisible pour l'œil humain.

8. Procédé (30) selon l'une quelconque des revendications 1 à 7, dans lequel le au moins un dispositif de détection de marquage (11) est disposé sur le au moins un dispositif d'usinage (6) et est déplacé avec le au moins un dispositif d'usinage (6).

9. Procédé (30) selon l'une quelconque des revendications 1 à 8, dans lequel le au moins un dispositif d'usinage (6)
- comprend au moins un dispositif de mesure de trajet (27), de préférence au moins un capteur rotatif, avec lequel le trajet parcouru par le au moins un dispositif d'usinage (6) par rapport à la au moins une pièce de béton (1) est mesuré, et/ou
- présente au moins un dispositif de réception de données (21), par l'intermédiaire duquel des données additionnelles (19) pour le positionnement du au moins un dispositif d'usinage (6) par rapport à la au moins une pièce de béton (1) et/ou pour l'usinage de la au moins une pièce de béton (1) par le au moins un dispositif d'usinage (6) sont reçues, et/ou
- au moins un dispositif de traitement de données (12) commandé par processeur, par l'intermédiaire duquel le au moins un dispositif d'usinage (6) est commandé, et/ou
- au moins un dispositif d'entraînement (22), avec lequel le au moins un dispositif d'usinage (6) est déplacé par rapport à la au moins une pièce de béton (1), et/ou
- au moins un outil de coupe (23), avec lequel la au moins une pièce de béton (1) est découpée au niveau de la au moins une position prédéfinie.

10. Procédé pour la fabrication d'au moins un produit préfabriqué en béton (28), en particulier d'au moins un faux plafond, dans lequel le au moins un produit préfabriqué en béton (28) est obtenu au moyen du procédé (30) pour l'usinage, en particulier la découpe, d'au moins une pièce de béton (1) selon l'une quelconque des revendications 1 à 9 à partir de la au moins une pièce de béton (1).

11. Ensemble (31) pour l'usinage, en particulier la découpe, d'au moins une pièce de béton (1), en particulier d'au moins un profilé extrudé pour la fabrication d'un produit préfabriqué en béton (28), comme par exemple d'un faux plafond, dans lequel l'ensemble (31) est réalisé et conçu pour usiner, en particulier pour découper, la au moins une pièce de béton (1) selon le procédé (30) selon l'une quelconque des revendications 1 à 9, dans lequel l'ensemble (31) présente au moins un dispositif d'usinage (6) pour l'usinage de la au moins une pièce de béton (1), dans lequel l'ensemble (31) présente au moins un dispositif de détection de marquage (11) pour la détection d'au moins un marquage (4) posé sur la pièce de béton (1), **caractérisé en ce que** l'ensemble (31) comprend un dispositif de commande centrale (8), dans lequel des données additionnelles (19) pour le positionnement du au moins un dispositif d'usinage (6) par rapport à la au moins une pièce de béton (1) et/ou pour l'usinage de la au moins une pièce de béton (1) par le au moins un dispositif d'usinage (6) peuvent être fournies par le dispositif de commande centrale (8).

12. Ensemble (31) selon la revendication 11, dans lequel l'ensemble (31)
- présente au moins une extrudeuse ou machine à coffrage coulissant pour la fabrication de la au moins une pièce de béton (1), et/ou
- présente au moins un dispositif de marquage automatique (5) pour la pose d'au moins un marquage (4) sur au moins une pièce de béton (1).

13. Ensemble (31) selon la revendication 11 ou 12, dans lequel
- le au moins un dispositif de détection de marquage (11) est disposé sur le au moins un dispositif d'usinage (6), et/ou
- est réalisé pour émettre et/ou pour recevoir une lumière visible ou invisible pour l'œil humain, et/ou
- est réalisé pour détecter au moins une ligne (25) et/ou forme bidimensionnelle (26).

14. Ensemble (31) selon l'une quelconque des revendications 11 à 13, dans lequel le au moins un dispositif d'usinage (6)
- comprend au moins un dispositif de mesure de trajet (27), de préférence au moins un capteur rotatif, avec lequel le trajet parcouru par le au moins un dispositif d'usinage (6) par rapport à la au moins une pièce de béton (1) peut être mesuré, et/ou
- présente au moins un dispositif de réception de données (21), par l'intermédiaire duquel des données additionnelles (19) pour le positionnement du au moins un dispositif d'usinage (6) par rapport à la au moins une pièce de béton (1) et/ou pour l'usinage de la au moins une pièce de béton (1) par le au moins un dispositif d'usinage (6) peuvent être reçues, et/ou
- présente au moins un dispositif de traitement de données (12) commandé par processeur, par l'intermédiaire duquel le au moins un dispositif d'usinage (6) peut être commandé, et/ou
- présente au moins un dispositif d'entraînement (22), avec lequel le au moins un dispositif d'usinage (6) peut être déplacé par rapport à la au moins une pièce de béton (1), et/ou
- présente au moins un outil de coupe (23), avec lequel la au moins une pièce de béton (1) peut être découpée au niveau d'au moins une position prédéfinie.

15. Ensemble (31) selon l'une quelconque des revendications 11 à 14, dans lequel l'ensemble (31) présente au moins un dispositif de traitement de données (24), avec lequel les données additionnelles (19) peuvent être transmises à le au moins un dispositif d'usinage (6), de préférence sans fil, et/ou au moyen d'au moins une mémoire de données, par exemple une clé USB.
